# EUROPÄISCHE PATENTSCHRIFT

(11) **EP 2 813 745 B1**
(45) Veröffentlichungstag und Bekanntmachung des Hinweises auf die Patenterteilung: **14.12.2016**
(21) Anmeldenummer: 14001341.8
(22) Anmeldetag: 12.04.2014
(51) Int. Cl.: F16P 3/02, B23Q 11/08

(54) **Abdeckeinrichtung für bewegliche Anlagen- oder Maschinenteile**
Covering device for movable system or machine parts
Dispositif de recouvrement pour des pièces mobiles de machine ou d'installation

(30) Priorität: 07.06.2013 DE 202013005226 U
(43) Veröffentlichungstag der Anmeldung: 17.12.2014
(73) Patentinhaber: Hübner GmbH & Co. KG, 34123 Kassel (DE)
(72) Erfinder: Krug, Lars, 34376 Immenhausen (DE); Busch, Thomas, 34359 Reinhardshagen (DE)
(74) Vertreter: Patentanwälte Walther Hinz Bayer PartGmbB

(56) Entgegenhaltungen:
- EP-A2- 2 546 119
- DE-A1- 4 007 862
- DE-B3- 10 324 524

## Beschreibung

Die vorliegende Erfindung betrifft eine Abdeckeinrichtung für bewegliche Anlagen- oder Maschinenteile, wie z. B. einen Maschinenbalg, eine Achsmanschette, wobei die Abdeckeinrichtung einen Festigkeitsträger aufweist, wobei der Festigkeitsträger eine Vielzahl von Fäden oder Garnen gemäß dem Oberbegriff des Anspruches 1 aufweist.

Aus der EP 2 546 119 A2 ist der Balg eines Übergangs zwischen gelenkig miteinander verbundener Fahrzeuge oder das Faltenvordach einer Fluggasttreppe oder-brücke bekannt, wobei das Balgmaterial einen Festigkeitsträger aufweist, der aus Fäden oder Garnen besteht, die einen vernetzten Silikonkautschuk aufweisen.

Die DE 103 24 524 B3 beschreibt in diesem Zusammenhang ein Gewebe für einen Faltenbalg, wobei die Falten des Gewebes aus einem Silikonkautschuk bestehen.

Zu beweglichen Anlagenteilen gehören allerdings nicht nur z. B. Teleskopauszüge bei Maschinen, die von Maschinenbälgen abgedeckt sind, sondern auch Vordächer von Fluggastbrücken oder -treppen mit einem Balg.

Abdeckeinrichtungen, insbesondere auch umtaufende Abdeckeinrichtungen für bewegliche Anlagen- oder Maschinenteile sind, wie bereits ausgeführt, auch unter dem Begriff der Maschinenbälge bekannt. Solche Maschinenbälge umgreifen bewegliche Teile einer Maschine oder Anlage und sind häufig als Faltenbälge ausgebildet. Durch solche Maschinenbälge wird z. B. häufig die Schlittenbahn eines Maschinenschlittens überspannt, um die Schlittenbahn vor Verschmutzung durch Späne oder Flüssigkeiten zu schützen. Wie bereits ausgeführt sind derartige Bälge üblicherweise als Faltenbälge ausgebildet. Solche Faltenbälge werden durch eine ziehharmonika-artige Knickung des den Faltenbalg bildenden Gewebematerials hergestellt, Insbesondere zur Abdichtung gegenüber Flüssigkeiten kann dieses Gewebematerial auch mit einem Elastomer beschichtet sein.

Darüber hinaus sind auch Achsmanschetten bekannt, die im Querschnitt als kreisrunde Bälge ausgebildet sind. Zum Einsatz kommen hierbei Wellen- oder auch Faltenbälge, wobei durch den Einsatzzweck die Art des Balges bestimmt ist. Derartige Bälge in Form von Achsmanschetten bestehen üblicherweise aus einem oder mehreren Festigkeitsträgern, die zu beiden Seiten mit einem Elastomer beschichtet sind, wobei die Formgebung durch Vulkanisation erfolgt.

Bekannt sind ebenfalls Vordächer von Fluggastbrücken oder -treppen als bewegliche Anlagenteile, die balgartig ausgebildet sind.

Allen diesen vorgenannten Abdeckeinrichtungen ist gemein, dass die Herstellung sehr aufwendig ist. In diesem Zusammenhang ist insbesondere in Bezug auf Maschinenbälge die Herstellung der ziehharmonika artigen Gestaltung zu nennen, und bei beispielsweise Achsmanschetten die Vulkanisation einer solcher Achsmanschette in einer Vulkanisationsform.

Insbesondere bei Maschinenbälgen, die als Faltenbälge ausgebildet sind, stellen sich über kurz oder lang im Bereich der Knickung Risse ein, die einen Austausch eines solchen Maschinenbalges erforderlich machen.

Die der Erfindung zugrunde liegende Aufgabe besteht demzufolge darin, eine Abdeckeinrichtung für bewegliche Anlagen- oder Maschinenteile der eingangs genannten Art bereitzustellen, die nicht nur wesentlich einfacher in der Herstellung ist, infolgedessen auch preiswerter, und einem geringeren Verschleiß unterworfen ist, sondern darüber hinaus auch fertigungstechnisch variabel gestaltet werden kann.

Die Lösung der Aufgabe ergibt sich erfindungsgemäß aus den Merkmalen des kennzeichnenden Teils des Anspruches 1 in Verbindung mit den Merkmalen des Oberbegriffs. Der Festigkeitsträger weist Fäden aus einem vernetzten Silikonkautschuk auf. Fäden aus einem Silikonkautschuk besitzen eine erhöhte Dehnfähigkeit von mehreren 100 % bezogen auf die Ausgangslänge eines solchen Fadens. Ein hieraus hergestellter Festigkeitsträger, insbesondere in Form eines Gewebes, Gewirkes oder Gestrickes, weist insofern ebenfalls eine hohe Dehnfähigkeit von 180 % bis ca. 280 % auf. Hieraus folgt unmittelbar, dass eine z. B. als Maschinenbalg ausgebildete Abdeckeinrichtung, die aus einem Festigkeitsträger mit Fäden auf Basis eines Silikonkautschuks hergestellt wird, aufgrund der erhöhten Dehnfähigkeit nicht unbedingt Falten oder Wellen benötigt, um die erforderliche Auszugsweite bereitstellen zu können. Gleiches gilt sinngemäß auch für beispielsweise Achsmanschetten als Abdeckeinrichtung oder auch den Balg eines Vordaches einer Fluggastbrücke oder -treppe.

Die Steifigkeit der Abdeckeinrichtung als solche ist über die Länge der Abdeckeinrichtung unterschiedlich. In der Mitte zwischen den eingespannten Enden der Abdeckeinrichtung ist die Steifigkeit am geringsten. Die Steifigkeit kann allerdings auch von anderen Faktoren abhängig sein; so z. B. von äußeren Belastungen. Das heißt, einzelne Abdeckeinrichtungen können örtlich über ihre Länge gesehen durchaus unterschiedliche Anforderungen hinsichtlich ihrer Steifigkeit haben.

Wenn die Abdeckeinrichtung mindestens ein Profil aufweist, das lösbar mit der Abdeckung verbindbar ist, dann besteht die Möglichkeit, das Profil dort anzubringen, wo es zur Erzielung der erwünschten Steifigkeit erforderlich ist. Unter einer lösbaren Verbindung wird in diesem Zusammenhang eine Verbindung verstanden, bei der die einzelnen die Verbindung bildenden Teile ohne Beschädigung oder Zerstörung nahezu beliebig oft gelöst und wieder verbunden werden können.

Durch die lösbare Anbringung der Profile wird nun erreicht, dass der Abstand der Profile variabel gewählt werden kann, und zwar unabhängig von der Fertigung. Dies deshalb, weil die Profile erst bei der Konfektionierung angesetzt werden. Insofern lässt sich die Abdeckung als Webware oder Wirkware als Meterware in beliebiger Länge herstellen, zuschneiden und z. B. zu einem U-förmigen, kasten- oder ebenen Gebilde vernähen oder verkleben. Erst dann werden die Profile aufgesetzt. Dies ermöglicht eine preiswerte Fertigung. Denn bei der Balgherstellung ist es hingegen bislang so, dass die Profilrahmen unmittelbar während des Herstellungsprozesses in gleichen Abständen angebaut werden. Die Möglichkeit der variablen Anbringung der Profile bedeutet insofern auch, dass an den Stellen, an denen die geringste Steifigkeit der Abdeckeinrichtung zu erwarten ist, eine größere Anzahl von Profilen vorgesehen werden kann, als in den Bereichen, die steifer sind, wie dies der Fall ist unmittelbar in der Nähe der Anbringung der Abdeckeinrichtung am entsprechenden Maschinen- oder Anlagenteil. Das heißt, dass zur Mitte der Abdeckeinrichtung hin die Anzahl der Profile zunimmt und zum Ende hin abnimmt. Die Anzahl der Profile kann in der Summe insofern gleich bleiben, jedoch kann durch die Variation in der Anordnung der Profile die Abdeckung jeweils individuell und auch auf die Einsatzbedingungen abgestellt sein.

So ist insbesondere vorgesehen, dass das Profil eine Nut aufweist, und zwar insbesondere eine umlaufende Nut, wobei die Abdeckung, z. B. ein Stoff, der ein Gewebe mit einem Elastomer, z. B. einem silikonbeschichteten Gewirk oder Gestrick sein kann, in der Nut einliegend durch einen Keder fixierbar ist. Hieraus wird deutlich, dass an jeder beliebigen Stelle der Abdeckeinrichtung ein entsprechendes Profil anbringbar ist.

In diesem Zusammenhang ist vorgesehen, dass das Profil aus Metall, insbesondere Aluminium oder aus Kunststoff ausgebildet ist. Der Keder, der durch das Profil aufnehmbar ist, ist entweder einschiebbar oder aber der Keder kann in das Profil eingepresst werden. Es hat sich als vorteilhaft herausgestellt, wenn der Keder gummielastisch und vorteilhaft ein in sich geschlossener Ring ist, da er dann umlaufend in die Nut des Profiles eingepresst werden kann. Zur Erleichterung des Einpressvorgangs kann vorteilhaft der Keder einen Hohlraum aufweisen. Ein weiterer Vorteil dieser Ausgestaltung liegt darin, dass ein durchtrenntes Profil, durch den geschlossenen Keder zusammengehalten wird. Das Profil ist im Bereich des Bodens üblicherweise zu öffnen, um die Abdeckeinrichtung über das abzudeckende Element, z. B. einen Schlitten, stülpen zu können. Durch den geschlossenen, gummielastischen Keder werden die Enden des Profiles zusammengehalten, sodass auf gesonderte Verschlussmittel verzichtet werden kann.

Vorteilhafte Merkmale und Ausgestaltungen zu der Erfindung ergeben sich aus den Unteransprüchen.

Nach einem weiteren Merkmal der Erfindung ist vorgesehen, dass der Festigkeitsträger mit einem Elastomer, insbesondere auf Basis eines vernetzten Silikonkautschuks beschichtet ist, um neben der erhöhten Auszugsweite auch die entsprechende Dichtigkeit bereitstellen zu können. Hierbei ist insbesondere von Vorteil, wenn das Material für die Beschichtung gleich ist mit dem Material für die Herstellung der Fäden, um eine im Wesentlichen identische Dehnfähigkeit zwischen Beschichtung einerseits und dem Festigkeitsträger andererseits bereitstellen zu können. D. h., dass die Dehnfähigkeit der Beschichtung mindestens so hoch sein muss, wie die Dehnfähigkeit des Festigkeitsträgers, da es andernfalls zu Rissen beim Einsatz kommen könnte, was zum Eindringen von Flüssigkeiten führen würde.

Nach einem weiteren Merkmal der Erfindung ist vorgesehen, dass die Abdeckeinrichtung im Querschnitt U-, kasten- oder hülsenförmig ausgebildet ist. Die Abdeckeinrichtung kann hierbei bei einer im Querschnitt U-förmigen Gestaltung auf der Unterseite geöffnet sein. Kasten- oder hülsenförmige Abdeckeinrichtungen können allseits geschlossen sein.

Des Weiteren ist vorteilhaft bei einer Abdeckeinrichtung der zuvor beschriebenen Art, dass eine solche Abdeckeinrichtung auf Silikonbasis mit mindestens einem flächigen Festigkeitsträger nicht nur ein geringes Gewicht, sondern gleichzeitig eine erhöhte Elastizität oder Dehnfähigkeit aufweist und darüber hinaus witterungsbeständig, insbesondere UV-beständig ist, was insbesondere von Interesse bei Vordächern von Fluggastbrücken oder -treppen ist.

Die Fäden oder Garne des Festigkeitsträgers sind aus vernetztem Silikonkautschuk ausgebildet oder sind auf Basis eines vernetzten Silikonkautschuks hergestellt, und weisen insbesondere einen Modulwert im Bereich von 10 bis 100^{cN}/800 % vorzugsweise 20 bis 80^{cN}/800 % Dehnung auf. Das heißt, die einzelnen Fäden oder Garne sind gummielastisch ausgebildet und zeigen in der Form eines Gewebes, Gewirkes oder Geleges eine hohe Elastizität in insbesondere zwei Raumrichtungen. Insbesondere bei einem Festigkeitsträger in Form eines Gewebes kann vorgesehen sein, die Kettfäden oder die Schussfäden aus einem solchen elastischen Material in dem oben genannten Modulbereich herzustellen. Werden beispielsweise nur die Schussfäden aus einem solchen hoch elastischen Material hergestellt, für die Kettfäden jedoch Material eines Werkstoffs mit geringerer Elastizität verwendet, dann ergibt sich insofern ein mehr oder weniger monodirektional elastisches Gewebe, im Gegensatz zu einem bidirektional elastischen Gewebe, bei dem sowohl die Schussfäden als auch die Kettfäden eine hohe Elastizität ausweisen.

Nach einem weiteren Merkmal der Erfindung ist vorgesehen, dass die Fäden eine Ummantelung aus einem Kunststoff aufweisen, der nicht dem Material des Fadens entspricht. Dies vor folgendem Hintergrund Fäden aus einem Silikonelastomer sind insbesondere beim Weben oder Wirken schwer zu verarbeiten. Dies deshalb, weil solche Fäden aus einem Silikonelastomer eine sehr rutschhemmende Oberfläche aufweisen. Durch die Verwendung einer Ummantelung aus Kunststoff kann durch die Wahl eines geeigneten Kunststoffes die Reibung auf der Oberfläche eines solchen Fadens oder Garnes reduziert werden. In diesem Zusammenhang ist im Einzelnen des Weiteren vorgesehen, dass die Ummantelung durch einen den Faden, also die Seele umgebenden weiteren Fäden gebildet ist. Das heißt, dass der beispielsweise aus einem Silikonelastomer hergestellte Faden (Seele), der von einem Faden aus Polyamid oder Polyethylen umwickelt ist, sehr gute Gleiteigenschaften aufweist. Denkbar ist auch für den umhüllenden Kunststoff, insbesondere den umhüllenden Faden, einen solchen aus einem schwer entflammbaren Material wie z. B. Aramiden, Glasfasern oder Kohlefasern zu verwenden bzw. einen entsprechenden Kunststoff auszuwählen, der auf den Faden aufgebracht werden kann, beispielsweise im Tauchverfahren, dass heißt, der Silikonfaden erhält eine gleitfähige Oberfläche, die es erlaubt, einen solchen Faden zu einem Gewebe, Gewirk oder Gelege zu verarbeiten. Solche Fäden aus Aramid, Glasfasern oder Kohlefasern weisen zur Ummantelung des Silikonfadens neben einer verminderten Oberflächenreibung auch gleichzeitig flammhemmende Eigenschaften auf. Hieraus erfolgt im Weiteren, dass ein derart hergestellter flächenförmiger Festigkeitsträger nicht nur hochelastisch ausgebildet ist, sondern darüber hinaus auch hervorragende flammhemmende Eigenschaften aufweist.

Es wurde bereits darauf hingewiesen, dass die im Querschnitt kasten- oder U-förmig bzw. auch hülsenförmig umlaufende Abdeckeinrichtung in der Ausbildung als Balg einzelne Falten oder Wellen aufweist, wobei sich herausgestellt hat, dass aufgrund der erhöhten Dehnfähigkeit des Festigkeitsträgers, wenn er insbesondere aus Silikonfäden hergestellt ist, in Anhängigkeit vom Einsatzfall weniger als die Hälfte der Wellen oder Falten notwendig sind, wie dies bei einem herkömmlichen Balg der Fall ist. Das heißt, es wird ein erheblicher Teil der Dehnung durch das Material des Balges selbst bereitgestellt. Dies unter Berücksichtigung der Tatsache, dass die Fäden selbst in Abhängigkeit von der auf den Faden oder das Garn ausgeübten Zugkraft eine Dehnfähigkeit von mehreren 100 % aufweisen. Selbst im verarbeiteten Zustand solcher Fäden oder Garne zu flächenförmigen Festigkeitsträgern besitzen diese Festigkeitsträger immer noch eine Dehnfähigkeit von 100 bis zu 280 %. Unter bestimmten Umständen können Falten oder Wellen bei einer solchen Abdeckeinrichtung auch gänzlich entfallen, d. h., eine solche Abdeckeinrichtung weist umlaufend eine glatte Oberfläche auf.

Anhand der Zeichnungen wird die Erfindung nachstehend anhand eines Maschinenbalgs beispielhaft näher erläutert.
- Fig. 1: zeigt schematisch einen Ausschnitt einer balgartigen Abdeckeinrichtung in perspektivischer Darstellung;
- Fig. 2: zeigt die Ausbildung der Abdeckeinrichtung mit den mit der Abdeckung verbundenen Profilen im Schnitt.

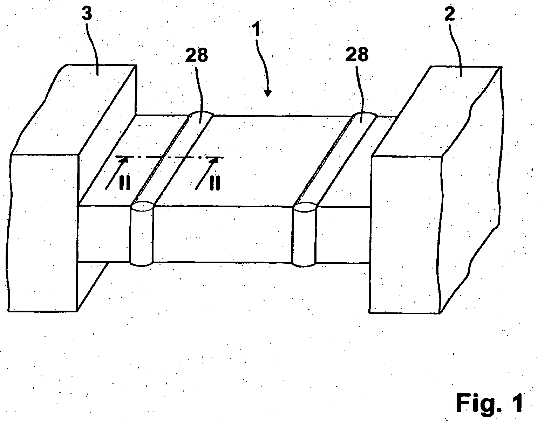

Gemäß Fig. 1 ist die insgesamt mit 1 bezeichnete Abdeckeinrichtung in Form z. B. eines Maschinenbalges zwischen den beiden Maschinenteilen 2 und 3 angeordnet.

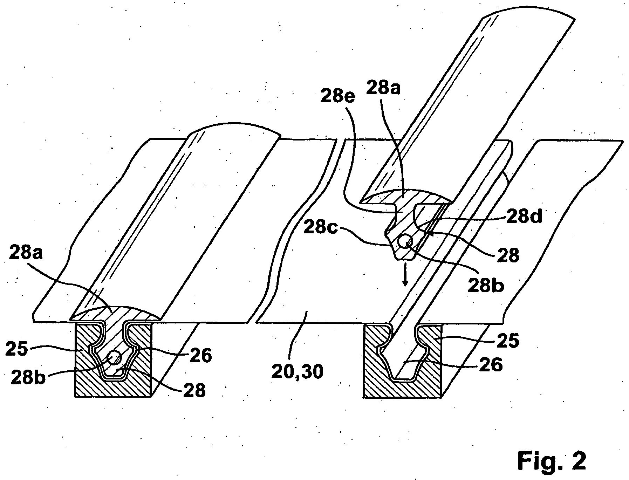

Aus der Fig. 2 ergibt sich in diesem Zusammenhang, dass das Profil 25 eine Nut 26 zeigt, in die die Stoffbahn 20 der Abdeckeinrichtung 1 eingelegt wird, und mit einem Keder 28 in der Nut 26 des Profils 25 fixiert wird. Der Keder 28 ist vorteilhaft gummielastisch ausgebildet, und wird des Weiteren vorteilhaft in die Nut 26 eingepresst.

Vorteilhaft weist der Keder 28 einen im Querschnitt schirmartigen Kederkopf 28a auf, der dafür sorgt, dass keine Feuchtigkeit oder Schmutz in die Nut 26 des Profils eindringen kann. Um zu gewährleisten, dass der Kederkopf 28a auf der mit einem Elastomer beschichteten Stoffbahn 20 gleiten kann, ist vorteilhaft die Unterseite des Kederkopfes 28a mit einem PTFE beschichtet. Der insofern ankerförmige Keder 28 besitzt einen konisch zulaufenden Kederfuß 28c, an den sich ein im Wesentlichen horizontaler Bund 28d abschließt. Durch einen Hals 28e geht der Kederfuß 28c in den Kederkopf 28a über.

Die Ausbildung des konisch zulaufenden Kederfußes und die Ausbildung des nahezu horizontalen Bundes erleichtert das Einrasten und erschwert das Herauslösen bei Zugbeanspruchung. Zur Erleichterung des Einpressvorgangs kann der Keder im Bereich des Kedeifußes einen Hohlraum 28b aufweisen.

Mit dieser Kederverbindung ist eine stabile Verbindung mit z. B. einer Stoffbahn möglich. Gleichzeitig besteht allerdings auch die Möglichkeit, das Profil 25 in Längsrichtung der Abdeckeinrichtung 1 zu versetzen, sodass die Möglichkeit eröffnet wird, die Profile ungleichmäßig über die Länge der beispielsweise tunnelförmigen Abdeckvorrichtung 1 anzuordnen. Die Enden des Keders 28 können verbunden werden, wenn es sich nicht um einen geschlossenen Keder handelt.

### Bezugszeichenliste:

- 1: Abdeckeinrichtung
- 2: Maschinenteil
- 3: Maschinenteil
- 20: Stoffbahn
- 25: Profil
- 26: Nut
- 28: Keder
- 28a: schematischer Kederkopf
- 28b: Hohlraum im Kederkopf
- 28c: Kederfuß
- 28d: im Wesentlichen horizontaler Bund

## Patentansprüche

1. Abdeckeinrichtung (1) für bewegliche Anlagen- oder Maschinenteile, wie z. B. Maschinenbälge, Achsmanschetten etc., wobei die Abdeckeinrichtung (1) einen Festigkeitsträger aufweist, wobei der Festigkeitsträger eine Vielzahl von Fäden oder Garnen aufweist,
wobei die Fäden oder Garne einen vernetzten Silikonkautschuk aufweisen, wobei die Abdeckeinrichtung (1) mindestens ein Profil (25) aufweist, das lösbar mit der Abdeckeinrichtung (1) verbindbar ist,
**dadurch gekennzeichnet,**
**dass** das Profil (25) eine Nut (26) aufweist, wobei die Abdeckeinrichtung (1) in der Nut (26) einliegend durch einen Keder (28) fixierbar ist.

2. Abdeckeinrichtung (1) für bewegliche Anlagen- oder Maschinenteile nach Anspruch 1,
**dadurch gekennzeichnet,**
**dass** der Festigkeitsträger als Gewebe, Gewirk oder Gelege ausgebildet ist.

3. Abdeckeinrichtung (1) für bewegliche Anlagen- oder Maschinenteile nach einem der voranstehenden Ansprüche,
**dadurch gekennzeichnet,**
**dass** der Festigkeitsträger mit einem Elastomer beschichtet ist.

4. Abdeckeinrichtung (1) für bewegliche Anlagen- oder Maschinenteile nach Anspruch 3,
**dadurch gekennzeichnet,**
**dass** die Beschichtung aus einem vernetzten Silikonkautschuk ausgebildet ist.

5. Abdeckeinrichtung (1) für bewegliche Anlagen- oder Maschinenteile nach einem der voranstehenden Ansprüche,
**dadurch gekennzeichnet,**
**dass** die Abdeckeinrichtung (1) im Querschnitt U-, kasten- oder hülsenförmig ausgebildet ist.

6. Abdeckeinrichtung (1) für bewegliche Anlagen oder Maschinenteile nach einem der voranstehenden Ansprüche,
**dadurch gekennzeichnet,**
**dass** Fäden oder Garne eine Ummantelung aus einem Kunststoff aufweisen, der nicht dem Material des Fadens oder Garns des Festigkeitsträgers entspricht.

7. Abdeckeinrichtung (1) für bewegliche Anlagen- oder Maschinenteile nach Anspruch 6,
**dadurch gekennzeichnet,**
**dass** die Ummantelung durch einen den Faden oder das Garn umgebenden weiteren Faden gebildet ist.

8. Abdeckeinrichtung (1) für bewegliche Anlagen- oder Maschinenteile nach Anspruch 6 oder 7,
**dadurch gekennzeichnet,**
**dass** die Ummantelung des **Fadens** oder Garns aus nicht oder schwer entflammbaren Kunststoff ausgebildet Ist.

9. Abdeckeinrichtung (1) für bewegliche Anlagen- oder Maschinenteile nach einem der voranstehenden Ansprüche,
**dadurch gekennzeichnet,**
**dass** der Festigkeitsträger als Gewebe, Gewirk oder Gelege in zumindest einer Raumrichtung elastisch nachgiebig ausgebildet ist.

10. Abdeckeinrichtung (1) für bewegliche Anlagen- oder Maschinenteile nach einem der voranstehenden Ansprüche,
**gekennzeichnet durch**
eine wellen- oder faltenförmige Ausbildung der Abdeckeinrichtung (1). **dadurch gekennzeichnet,**

11. Abdeckeinrichtung (1) für bewegliche Anlagen- oder Maschinenteile nach einem der voranstehenden Ansprüche,
**dadurch gekennzeichnet,**
**dass** der Keder (28) in das Profil (25) einschiebbar ist.

12. Abdeckeinrichtung (1) für bewegliche Anlagen- oder Maschinenteile nach einem der voranstehenden Ansprüche,
**dadurch gekennzeichnet,**
**dass** der Keder (28) in das Profil (25) einpressbar ist.

13. Abdeckeinrichtung (1) für bewegliche Anlagen- oder Maschinenteile nach einem der voranstehenden Ansprüche,
**dadurch gekennzeichnet,**
**dass** das Profil (25), das der Aufnahme des Keders (28) dient, sich quer zur Längsachse der Abdeckeinrichtung (1) erstreckt.

14. Abdeckeinrichtung (1) für bewegliche Anlagen- oder Maschinenteile nach einem der voranstehenden Ansprüche,
**dadurch gekennzeichnet,**
**dass** bei einer tunnelförmig umlaufenden Abdeckeinrichtung (1) das Profil (25) verschließbar ist.

15. Abdeckeinrichtung (1) für bewegliche Anlagen- oder Maschinenteile nach einem der voranstehenden Ansprüche,
**dadurch gekennzeichnet,**
**dass** der Keder (28) elastisch ausgebildet ist.

## Claims

1. A cover device (1) for movable plant or machine components, such as machine bellows, axle boots etc., wherein the cover device (1) has a reinforcing element, wherein the reinforcing element has a plurality of threads or yarns,
wherein the threads or yarns comprise a reticulated silicone rubber, wherein the cover device (1) has at least one profile (25), which can be detachably fastened to the cover device (1),
**characterized in that**,
the profile (25) has a groove (26), wherein the cover device (1) can be fixed in the groove (26) by a keder (28) so that it is enclosed therein.

2. The cover device (1) for movable plant or machine components according to claim 1,
**characterized in that**,
the reinforcing element is designed as a woven fabrics, a warp- knitted fabrics or a non-crimp fabric.

3. The cover device (1) for movable plant or machine components according to one of the previous claims,
**characterized in that**,
the reinforcing element is coated with an elastomer.

4. The cover device (1) for movable plant or machine components according to claim 3,
**characterized in that**,
the coating is made of a reticulated silicone rubber.

5. The cover device (1) for movable plant or machine components according to one of the previous claims,
**characterized in that**,
the cover device (1) has a U-shaped, box-shaped, or sleeve-shaped cross-section.

6. The cover device (1) for movable plant or machine components according to one of the previous claims,
**characterized in that**,
the threads or yarns have a sheathing made of a synthetic material, which does not correspond to the material of the thread or yarn of the reinforcing element.

7. The cover device (1) for movable plant or machine components according to claim 6,
**characterized in that**,
the sheathing is made of another thread surrounding the thread or yarn.

8. The cover device (1) for movable plant or machine components according to claim 6 or 7,
**characterized in that**,
the sheathing of the threads or yarns is made of a not flammable or hardly flammable synthetic material.

9. The cover device (1) for movable plant or machine components according to one of the previous claims,
**characterized in that**,
the reinforcing element is designed as a woven fabric, a warp-knitted fabric, or a non-crimp fabric that is elastic and pliable in at least one spatial direction.

10. The cover device (1) for movable plant or machine components according to one of the previous claims,
**characterized by**
the corrugated or fold-shaped configuration of the cover device (1).

11. The cover device (1) for movable plant or machine components according to one of the previous claims,
**characterized in that**,
the keder (28) is insertable into the profile (25).

12. The cover device (1) for movable plant or machine components according to one of the previous claims,
**characterized in that**,
the keder (28) is pressable into the profile (25).

13. The cover device (1) for movable plant or machine components according to one of the previous claims,
**characterized in that**,
the profile (25), which serves to receive the keder (28), extends transversely to the longitudinal axis of the cover device (1).

14. The cover device (1) for movable plant or machine components according to one of the previous claims,
**characterized in that**,
in a tunnel-shaped circumferential cover device (1), the profile (25) can be closed.

15. The cover device (1) for movable plant or machine components according to one of the previous claims,
**characterized in that**,
the keder (28) is designed to be elastic.

## Revendications

1. Dispositif de recouvrement (1) pour parties mobiles d'installations ou de machines, comme par exemple des soufflets de machine, manchons d'axe, etc., où le dispositif de recouvrement (1) comporte un renfort, où le renfort comporte une pluralité de bouts de fils ou de fils,
où les bouts de fils ou fils comportent un caoutchouc de silicone réticulé, où le dispositif de recouvrement (1) comporte au moins un profil (25), qui peut être connecté de manière détachable au dispositif de recouvrement (1),
**caractérisé en ce que** ,
le profil (25) comporte une rainure (26), où le dispositif de recouvrement (1) peut être fixé par insertion dans la rainure (26) grâce à un bourrelet (28).

2. Dispositif de recouvrement (1) pour parties mobiles d'installations ou de machines selon la revendication 1,
**caractérisé en ce que**,
le renfort est formé par un textile tissé, un tricot en trame, ou un textile non tissé.

3. Dispositif de recouvrement (1) pour parties mobiles d'installations ou de machines selon l'une des revendications précédentes,
**caractérisé en ce que**,
le renfort est revêtu d'un élastomère.

4. Dispositif de recouvrement (1) pour parties mobiles d'installations ou de machines selon la revendication 3,
**caractérisé en ce que**,
le revêtement est formé d'un caoutchouc de silicone réticulé.

5. Dispositif de recouvrement (1) pour parties mobiles d'installations ou de machines selon l'une des revendications précédentes,
**caractérisé en ce que**,
le dispositif de recouvrement (1) est formé en coupe transversale en forme de U, de caisson ou de manchon.

6. Dispositif de recouvrement (1) pour parties mobiles d'installations ou de machines selon l'une des revendications précédentes,
**caractérisé en ce que**,
les bouts de fils ou fils comportent une gaine en matière synthétique qui ne correspond pas au matériau des bouts de fils ou fils du renfort.

7. Dispositif de recouvrement (1) pour parties mobiles d'installations ou de machines selon la revendication 6,
**caractérisé en ce que**,
la gaine est formée par un autre bout de fil entourant le bout de fil ou le fil.

8. Dispositif de recouvrement (1) pour parties mobiles d'installations ou de machines selon la revendication 6 ou 7,
**caractérisé en ce que**,
la gaine du bout de fil ou du fil est réalisée en une matière synthétique ininflammable ou difficilement inflammable.

9. Dispositif de recouvrement (1) pour parties mobiles d'installations ou de machines selon l'une des revendications précédentes,
**caractérisé en ce que**,
le renfort est formé d'un textile tissé, d'un tricot en trame, ou d'un textile non tissé élastiquement souple dans au moins une direction spatiale.

10. Dispositif de recouvrement (1) pour parties mobiles d'installations ou de machines selon l'une des revendications précédentes,
**caractérisé par**
la réalisation ondulée ou en forme de plis du dispositif de recouvrement (1).

11. Dispositif de recouvrement (1) pour parties mobiles d'installations ou de machines selon l'une des revendications précédentes,
**caractérisé en ce que**,
le bourrelet (28) peut être inséré dans le profil (25).

12. Dispositif de recouvrement (1) pour parties mobiles d'installations ou de machines selon l'une des revendications précédentes,
**caractérisé en ce que**,
le bourrelet (28) peut être enfoncé dans le profil (25).

13. Dispositif de recouvrement (1) pour parties mobiles d'installations ou de machines selon l'une des revendications précédentes,
**caractérisé en ce que**,
le profil (25) servant à recevoir le bourrelet (28), s'étend transversalement à l'axe longitudinal du dispositif de recouvrement (1).

14. Dispositif de recouvrement (1) pour parties mobiles d'installations ou de machines selon l'une des revendications précédentes,
**caractérisé en ce que**,
lorsque le dispositif de recouvrement (1) prend la forme d'un tunnel périphérique, le profil (25) peut être fermé.

15. Dispositif de recouvrement (1) pour parties mobiles d'installations ou de machines selon l'une des revendications précédentes,
**caractérisé en ce que**,
le bourrelet (28) est élastique.
